# EUROPÄISCHE PATENTSCHRIFT

(11) **EP 2 226 499 B1**
(45) Veröffentlichungstag und Bekanntmachung des Hinweises auf die Patenterteilung: **21.08.2013**
(21) Anmeldenummer: 10001552.8
(22) Anmeldetag: 16.02.2010
(51) Int. Cl.: F03D 7/02, F03D 7/04

(54) **Verfahren zum Betreiben einer Windenergieanlage und Windenergieanlage, die das Verfahren ausführt**
Method for operating a wind energy system and wind energy system for executing the method
Procédé de fonctionnement d'une éolienne et éolienne exécutant le procédé

(30) Priorität: 03.03.2009 DE 102009011425
(43) Veröffentlichungstag der Anmeldung: 08.09.2010
(73) Patentinhaber: Nordex Energy GmbH, 22848 Norderstedt (DE)
(72) Erfinder: Drossel, Detlef, 22850 Norderstedt (DE); Harms, Ulrich, 22399 Hamburg (DE); Kabatzke, Wolfgang, 21502 Geesthacht (DE)
(74) Vertreter: Hauck Patent- und Rechtsanwälte

(56) Entgegenhaltungen:
- DE-A1-102007 007 872

## Beschreibung

Die Erfindung betrifft ein Verfahren zum Betreiben einer Windenergieanlage, die einen Rotor mit mindestens einem Rotorblatt, einen Generator und einen Drehzahlregler zur Regelung der Drehzahl eines Triebstrangelements durch Verstellen eines Generatormoments und/oder eines Blatteinstellwinkels aufweist. Bei dem Verfahren wird eine Winkelgeschwindigkeit des Triebstrangelements, die der Drehzahl des Triebstrangelements entspricht, durch zeitliche Ableitung eines Winkelpositionssignals ermittelt. Zusätzlich wird eine Winkelbeschleunigung des Triebstrangelements ermittelt. Außerdem werden Sollwerte für das Generatormoment und/oder den Blatteinstellwinkel unter Berücksichtigung der Winkelgeschwindigkeit des Triebstrangelements und der Winkelbeschleunigung des Triebstrangelements vorgegeben.

Die Einbeziehung der ermittelten Winkelbeschleunigung des Triebstrangelements, beispielsweise der Rotornabe, in die Drehzahlregelung hat den Vorteil, dass schneller auf Drehzahländerungen reagiert werden kann. Dadurch wird das dynamische Verhalten der Regelung verbessert. Beispielsweise ist es anhand des Beschleunigungssignals möglich, einen sprunghaften Anstieg der Drehzahl des Triebstrangelements schnell zu erkennen und diesem durch einen geeigneten Regelungsgriff entgegenzuwirken, bevor beispielsweise ein Sollwert für die Drehzahl des Triebstrangelements tatsächlich überschritten wird.

Ein solches Verfahren ist beispielsweise aus der Druckschrift DE 10 2007 007 872 A1 bekannt, wobei zwecks Ermittlung der Winkelbeschleunigung des Rotors drei im Rotor angeordnete Beschleunigungssensoren vorgesehen sind. Aus den von diesen Beschleunigungssensoren gemessenen Beschleunigungswerten wird die Winkelbeschleunigung des Rotors berechnet.

Davon ausgehend ist es die Aufgabe der Erfindung, ein Verfahren zum Betreiben einer Windenergieanlage mit den Merkmalen des Oberbegriffs des Anspruchs 1 zur Verfügung zu stellen, das mit einfachen Mitteln ausgeführt werden kann und bei dem die Drehzahlregelung ein gutes Dynamikverhalten aufweist. Ebenfalls Aufgabe der Erfindung ist es, eine Windenergieanlage zur Verfügung zu stellen, die das genannte Verfahren ausführen kann.

Diese Aufgabe wird gelöst durch das Verfahren mit den Merkmalen des Anspruchs 1 und durch die Windenergieanlage mit den Merkmalen des Anspruchs 7. Vorteilhafte Ausgestaltungen des Verfahrens bzw. der Windenergieanlage sind in den sich jeweils anschließenden Unteransprüchen angegeben.

Das erfindungsgemäße Verfahren dient zum Betreiben einer Windenergieanlage, die einen Rotor mit mindestens einem Rotorblatt, einen Generator und einen Drehzahlregler zur Regelung der Drehzahl eines Triebstrangelements durch Verstellen eines Generatormoments und/oder eines Blatteinstellwinkels aufweist, und weist die folgenden Schritte auf:
- Ermitteln der Winkelgeschwindigkeit des Triebstrangelements durch zeitliche Ableitung eines Winkelpositionssignals,
- Ermitteln der Winkelbeschleunigung des Triebstrangelements,
- Vorgeben von Sollwerten für das Generatormoment und/oder den Blatteinstellwinkel unter Berücksichtigung der Winkelgeschwindigkeit des Triebstrangelements und der Winkelbeschleunigung des Triebstrangelements, wobei
- die Winkelbeschleunigung des Triebstrangelements aus dem Winkelpositionssignal ermittelt wird und nach der ersten zeitlichen Ableitung des Winkelpositionssignals und vor einer zweiten zeitlichen Ableitung des Winkelpositionssignals eine Filterung mit einer oberen Grenzfrequenz erfolgt, die auf eine maximale Verstellgeschwindigkeit des Generatormoments und/oder des Blatteinstellwinkels abgestimmt ist.

Als Triebstrang wird üblicherweise ein Aufbau bestehend aus Rotornabe, Rotorwelle, Getriebe, Kupplung, Generatorwelle und Generator bezeichnet. Das Triebstrangelement, das der erfindungsgemäßen Regelung zugrunde gelegt wird, kann insbesondere die Rotorwelle, eine (schnell oder langsam rotierende) Getriebewelle, die Kupplung oder die Generatorwelle oder ein sonstiges rotierendes Element des Triebstrangs sein.

Zur Optimierung des dynamischen Verhaltens der Drehzahlregelung wird auch bei der Erfindung, wie in der oben genannten Druckschrift, die Winkelbeschleunigung des Triebstrangelements berücksichtigt. Im Gegensatz zu dem bekannten Verfahren sind zur Ermittlung der Winkelbeschleunigung jedoch nicht separate Sensoren erforderlich, sondern die Winkelbeschleunigung wird aus einem Winkelpositionssignal ermittelt. Das erfindungsgemäße Verfahren kann daher mit geringerem apparativem Aufwand ausgeführt werden. Es ist dadurch zugleich weniger störanfällig.

Die Erfindung beruht auf der Erkenntnis, dass eine Ermittlung der Winkelbeschleunigung aus dem Signal eines herkömmlichen Winkelpositionssensors, etwa eines Inkrementalgebers, trotz der unter Umständen schlechten Qualität eines derartigen Winkelpositionssignals möglich ist. Die bekannten Fehler und Störungen des Winkelpositionssignals beruhen einerseits auf unvermeidlichen Quantisierungsfehlem, die dem digitalen Charakter herkömmlicher Inkrementalgeber geschuldet sind. Andererseits entstehen Störsignale z.B. durch Montagetoleranzen und Zahneingrifffrequenzen des Getriebes. All diese Störeinflüsse verstärken sich bei der zur Berechnung der Winkelbeschleunigung erforderlichen zweifachen zeitlichen Ableitung des Winkelpositionssignals, so dass ein auf diese Weise berechnetes Winkelbeschleunigungssignal in der Regel unbrauchbar ist. Versuche haben ergeben, dass geeignete Signalaufbereitungsmaßnahmen trotz der hohen Anforderungen der Regelung an die Qualität des Winkelbeschleunigungssignals getroffen werden können und eine Ermittlung der Winkelbeschleunigung aus dem Winkelpositionssignal praktikabel ist.

Insbesondere hat sich gezeigt, dass eine Filterung des Winkelpositionssignals nach dessen erster zeitlicher Ableitung, also eines die Winkelgeschwindigkeit repräsentierenden Signals, mit einer oberen Grenzfrequenz erforderlich ist, die auf eine maximale Verstellgeschwindigkeit des Generatormoments und/oder des Blatteinstellwinkels abgestimmt ist. Nach dieser Filtermaßnahme kann die zweite zeitliche Ableitung des Signals erfolgen, um die Winkelbeschleunigung zu ermitteln. Durch die Filterung mit der genannten oberen Grenzfrequenz werden hochfrequente Anteile des Winkelgeschwindigkeitssignals herausgefiltert. Diese würden andernfalls zu hochfrequenten Schwankungen des Winkelbeschleunigungssignals führen. Durch die genannte Abstimmung der oberen Grenzfrequenz der Filterung werden insbesondere diejenigen Frequenzanteile herausgefiltert, die für die vorzunehmenden Regeleingriffe durch Bereitstellen der Sollwerte für das Generatormoment und/oder den Blatteinstellwinkel unerwünscht sind. Die obere Grenzfrequenz kann beispielsweise kleiner sein als eine Eigenfrequenz des Triebstrangs von beispielsweise 2 Hertz. In diesem Fall wird der Pitchantrieb mit auf Triebstrangschwingungen zurückzuführenden Stellsignalen, denen er auf Dauer nicht folgen kann und soll, nicht belastet.

Dass die obere Grenzfrequenz auf die maximale Verstellgeschwindigkeit des Blatteinstellwinkels und/oder des Generatormoments abgestimmt ist bedeutet, dass auf Grundlage des bekannten dynamischen Verhaltens des Blattverstellsystems bzw. eines das Generatormoment vorgebenden Umrichters festgelegt wird, mit welcher maximalen Frequenz ein Regeleingriff erfolgen soll. Dieser Frequenz entsprechend wird die obere Grenzfrequenz der Filterung gewählt. Dadurch wird einerseits sichergestellt, dass die Verbesserung des Dynamikverhaltens in einer an die Möglichkeiten des Blattverstellsystems bzw. der Momentenvorgabe angepassten Weise voll ausgenutzt wird. Andererseits werden höherfrequente Störanteile wirksam unterdrückt, so dass eine Weiterverarbeitung des Winkelbeschleunigungssignals im Drehzahlregler stabil möglich ist.

In einer Ausgestaltung des Verfahrens wird vor einer zeitdiskreten Übertragung des Winkelgeschwindigkeitssignals dieses mit einer oberen Grenzfrequenz gefiltert, die kleiner ist als die Hälfte der Abtastfrequenz des Signals. Durch diese Ausgestaltung kann eine digitale Übertragung des Winkelgeschwindigkeitssignals - beispielsweise von einem Winkelpositionssensor an der Rotorwelle oder an einer Welle des Getriebes zu einer zentralen Steuerung - erfolgen, ohne dass es zu zusätzlichen Störsignalen aufgrund von Alias-Effekten kommt.

In einer weiteren Ausgestaltung wird für die Filterung nach der ersten zeitlichen Ableitung und vor der zweiten zeitlichen Ableitung des Winkelpositionssignals und/oder für die Filterung vor der zeitdiskreten Übertragung des Winkelgeschwindigkeitssignals ein Tiefpassfilter mindestens zweiter Ordnung verwendet. Bei einer Filterung mit dieser Flankensteilheit wird eine überproportionale Absenkung von Störungen zu hohen Frequenzen hin erreicht. Dadurch kann die Qualität des Winkelbeschleunigungssignals verbessert werden.

In einer Ausgestaltung erfolgen die erste zeitliche Ableitung des Winkelpositionssignals und/oder die Filterung nach der ersten zeitlichen Ableitung des Winkelpositionssignals und vor der zweiten zeitlichen Ableitung des Winkelpositionssignals im Umrichter, der ein Generatormoment vorgibt. Durch diese räumliche Integration der genannten Signalverarbeitungsschritte in den Umrichter kann das dynamische Verhalten der Regelung insbesondere bezüglich der Generatormomentvorgabe weiter verbessert werden. Es ergibt sich überdies ein Synergieeffekt, weil die Generatordrehzahl oder ein diese repräsentierender Wert in der Regel unabhängig vom erfindungsgemäßen Verfahren im Umrichter benötigt wird.

In einer Ausgestaltung erfolgen die erste zeitliche Ableitung des Winkelpositionssignals (ϕ) und/oder die Filterung nach der ersten zeitlichen Ableitung des Winkelpositionssignals (ϕ) und vor einer zweiten zeitlichen Ableitung des Winkelpositionssignals (ϕ) in oder an einer Messeinrichtung zur Messung des Winkelpositionssignals (ϕ), also beispielsweise innerhalb eines auf Grundlage der Winkelposition arbeitenden Drehzahlgebers. Dieser kann bevorzugt an der Nabe angeordnet sein, um möglichst wenig von Schwingungen des Triebstrangs beeinträchtigt zu sein.

Gemäß einer Ausgestaltung ist die obere Grenzfrequenz der Filterung im Umrichter auf die maximale Verstellgeschwindigkeit des Generatormoments abgestimmt und die maximale Verstellgeschwindigkeit des Blatteinstellwinkels bleibt unberücksichtigt. In dieser Ausgestaltung kann ein besonders gutes dynamisches Verhalten der Regelung erreicht werden, weil bezüglich der Vorgabe des Generatormoments auf die gegenüber der Blattverstelleinrichtung höhere Dynamik des Umrichters abgestellt wird. Sofern die Drehzahlregelung durch Vorgeben eines Generatormoments erfolgt, kann die volle Bandbreite dieser Regelstrecke ausgeschöpft werden.

Die erfindungsgemäße Windenergieanlage hat
- einen Rotor mit mindestens einem Rotorblatt,
- einen Generator,
- eine Messeinrichtung zur Messung einer Winkelposition eines Triebstrangelements,
- eine Einrichtung zur Ermittlung einer Winkelbeschleunigung des Triebstrangelements,
- einen Drehzahlregler zur Regelung der Drehzahl des Triebstrangelements, der so ausgebildet ist, dass er Sollwerte für das Generatormoment und/oder den Blatteinstellwinkel unter Berücksichtigung der Winkelgeschwindigkeit des Triebstrangelements und der Winkelbeschleunigung des Triebstrangelements vorgeben kann, wobei
- die Einrichtung zur Ermittlung der Winkelbeschleunigung des Triebstrangelements eine erste Ableitungsstufe, die das Winkelpositionssignal zeitlich ableiten kann, eine erste Filterstufe, die das einmal zeitlich abgeleitete Winkelpositionssignal mit einer oberen Grenzfrequenz, die auf eine maximale Verstellgeschwindigkeit des Generatormoments und/oder des Blatteinstellwinkels abgestimmt ist, filtern kann, und eine zweite Ableitungsstufe aufweist, die das einmal zeitlich abgeleitete und gefilterte Winkelpositionssignal ein zweites Mal zeitlich ableiten kann, um die Winkelbeschleunigung des Triebstrangelements zu ermitteln.

Die erfindungsgemäße Windenergieanlage kann das im Einzelnen beschriebene Verfahren ausführen. Es versteht sich, dass insbesondere die Einrichtung zur Ermittlung der Winkelbeschleunigung des Triebstrangelements in Form von Software beispielsweise in einer Steuerung der Windenergieanlage ausgeführt sein kann. Entsprechend können in der ersten und zweiten Ableitungsstufe sowie in der Filterstufe insbesondere numerische Verfahren zur Durchführung der jeweiligen Signalverarbeitungsschritte zur Anwendung kommen. Es ist aber auch eine Hardware-Realisierung der Signalverarbeitungsschritte denkbar.

Es können auch mehrere Messeinrichtungen zur Messung von Winkelpositionssignalen vorgesehen sein. Diese können dieselbe oder unterschiedliche Winkelpositionen messen, insbesondere an unterschiedlichen Triebstrangelementen. Es können auch mehrere Einrichtungen zur Ermittlung von Winkelbeschleunigungen kombiniert werden, die beispielsweise die Winkelbeschleunigungen unterschiedlicher Triebstrangelemente ermitteln und den weiteren Verfahrensschritten zu Grunde legen.

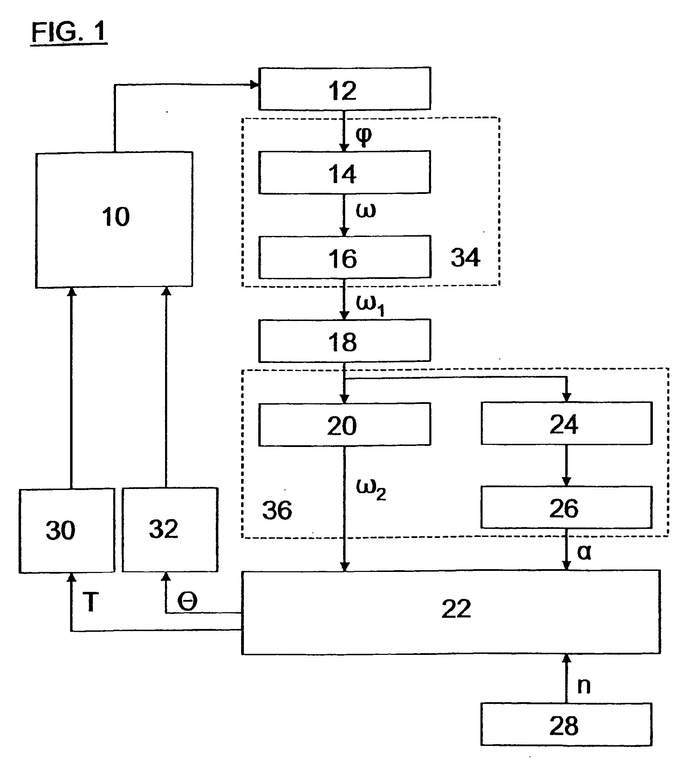

Das erfindungsgemäße Verfahren wird nachfolgend anhand eines in einer Figur dargestellten Ausführungsbeispiels näher erläutert. Die einzige Figur zeigt den Verfahrensablauf in einer vereinfachten schematischen Darstellung.

Elemente des Triebstranges einer Windenergieanlage sind in der Figur mit 10 bezeichnet. Insbesondere umfasst der Kasten 10 eine Rotornabe, eine Rotorwelle, ein Getriebe, eine Generatorwelle, eine Kupplung und einen Generator. Der Winkelpositionssensor 12 steht mit einem rotierenden Triebstrangelement in Verbindung, beispielsweise mit der Rotornabe oder der Generatorwelle, deren Drehzahl er erfasst. Ist im Triebstrang ein Getriebe vorhanden, kann die Drehzahl beispielsweise an der schnell und/oder an der langsam drehenden Welle erfasst werden. Im Beispiel handelt es sich bei dem Winkelpositionssensor 12 um einen herkömmlichen Inkrementalgeber oder Absolutwertgeber. Wie in der Figur veranschaulicht, liefert der Winkelpositionssensor 12 ein Winkelpositionssignal ϕ.

Die weitere Verarbeitung des Winkelpositionssignals ϕ erfolgt innerhalb der Einrichtungen 34, 36 zur Ermittlung der Winkelgeschwindigkeit und Winkelbeschleunigung des Triebstrangelements. Die Einrichtungen 34 und 36 können beispielsweise in Form von Softwaremodulen im Hauptumrichter bzw. in der Steuerung der Windenergieanlage vorliegen. Alternativ kann die Einrichtung 34 Bestandteil des Sensors 12 sein. Die Einrichtung 36 kann in die Steuerung integriert sein. Eingangsgröße für die Einrichtung 34 ist das Winkelpositionssignal ϕ. Dieses wird zunächst in der ersten Ableitungsstufe 14 einmal nach der Zeit abgeleitet. Am Ausgang der ersten Ableitungsstufe 14 steht dann ein Winkelgeschwindigkeitssignal ω zur Verfügung. Dieses Winkelgeschwindigkeitssignal ω wird in der mit 16 bezeichneten zweiten Filterstufe mit einer oberen Grenzfrequenz gefiltert und ist anschließend mit ω₁ bezeichnet. Das gefilterte Winkelgeschwindigkeitssignal ω₁ wird digital abgetastet und durch die zeitdiskrete Übertragungseinrichtung 18 zur weiteren Verarbeitung übertragen. Die Abtastung erfolgt dabei mit einer vorgegebenen Abtastfrequenz. Die obere Grenzfrequenz der Filterung in der zweiten Filterstufe 16 ist dabei kleiner als die Hälfte dieser Abtastfrequenz.

An die zeitdiskrete Übertragung mit der Übertragungseinrichtung 18 schließt sich eine dritte Filterstufe 20 an, die ein für die weitere Verarbeitung im Drehzahlregler 22 vorgesehenes Winkelgeschwindigkeitssignal ω₂ ausgibt. Parallel dazu wird das von der Übertragungseinrichtung 18 kommende Winkelgeschwindigkeitssignal der ersten Filterstufe 24 zugeführt, in der das Signal mit einer oberen Grenzfrequenz gefiltert wird, die auf die maximale Verstellgeschwindigkeit des Generatormoments und/oder des Blatteinstellwinkels abgestimmt ist. Das auf diese Weise gefilterte Winkelgeschwindigkeitssignal wird in der zweiten Ableitungsstufe 26 erneut nach der Zeit abgeleitet. Ergebnis dieser Ableitung ist das Winkelbeschleunigungssignal α , das ebenfalls dem Drehzahlregler 22 zur Verfügung gestellt wird. Als weitere Eingangsgröße liegt am Drehzahlregler 22 ein Sollwert für die Drehzahl n des Triebstrangelements an, der von einer Einheit 28 vorgegeben wird. Als Ausgangsgrößen der Drehzahlregelung gibt der Drehzahlregler 22 Sollwerte für das Generatormoment T und für den Blatteinstellwinkel des Rotors θ aus. Diese werden an den Hauptumrichter 30 bzw. den Pitchregler 32 übergeben, wo eine sollwertgemäße Einstellung des Generatormoments und des Blatteinstellwinkels erfolgt.

## Patentansprüche

1. Verfahren zum Betreiben einer Windenergieanlage, die einen Rotor mit mindestens einem Rotorblatt, einen Generator und einen Drehzahlregler (22) zur Regelung der Drehzahl eines Triebstrangelements durch Verstellen eines Generatormoments und/oder eines Blatteinstellwinkels (θ) aufweist, mit den folgenden Schritten:
- Ermitteln der Winkelgeschwindigkeit (ω) des Triebstrangelements durch zeitliche Ableitung eines Winkelpositionssignals (ϕ),
- Ermitteln der Winkelbeschleunigung (α) des Triebstrangelements,
- Vorgeben von Sollwerten für das Generatormoment (T) und/oder den Blatteinstellwinkel (θ) unter Berücksichtigung der Winkelgeschwindigkeit (ω) des Triebstrangelements und der Winkelbeschleunigung (α) des Triebstrangelements, **dadurch gekennzeichnet, dass**
- die Winkelbeschleunigung (α) des Triebstrangelements aus dem Winkelpositionssignal (ϕ) ermittelt wird, wobei nach der ersten zeitlichen Ableitung des Winkelpositionssignals (ϕ) und vor einer zweiten zeitlichen Ableitung des Winkelpositionssignals (ϕ) eine Filterung mit einer oberen Grenzfrequenz erfolgt, die auf eine maximale Verstellgeschwindigkeit des Generatormoments (T) und/oder des Blatteinstellwinkels (θ) abgestimmt ist.

2. Verfahren nach Anspruch 1, **dadurch gekennzeichnet, dass** vor einer zeitdiskreten Übertragung des Winkelgeschwindigkeitssignals (ω) dieses mit einer oberen Grenzfrequenz gefiltert wird, die kleiner ist als die Hälfte der Abtastfrequenz des Signals.

3. Verfahren nach Anspruch 1 oder 2, **dadurch gekennzeichnet, dass** für die Filterung nach der ersten zeitlichen Ableitung des Winkelpositionssignals (ϕ) und/oder für die Filterung vor der zeitdiskreten Übertragung des Winkelgeschwindigkeitssignals (ω) ein Tiefpassfilter mindestens zweiter Ordnung verwendet wird.

4. Verfahren nach einem der Ansprüche 1 bis 3, **dadurch gekennzeichnet, dass** die erste zeitliche Ableitung des Winkelpositionssignals (ϕ) und/oder die Filterung nach der ersten zeitlichen Ableitung des Winkelpositionssignals (ϕ) und vor einer zweiten zeitlichen Ableitung des Winkelpositionssignals (ϕ) im Umrichter erfolgen, der ein Generatormoment (T) einstellt.

5. Verfahren nach einem der Ansprüche 1 bis 3, **dadurch gekennzeichnet, dass** die erste zeitliche Ableitung des Winkelpositionssignals (ϕ) und/oder die Filterung nach der ersten zeitlichen Ableitung des Winkelpositionssignals (ϕ) und vor einer zweiten zeitlichen Ableitung des Winkelpositionssignals (ϕ) in oder an einer Messeinrichtung zur Messung des Winkelpositionssignals (ϕ) erfolgen.

6. Verfahren nach Anspruch 4, **dadurch gekennzeichnet, dass** die obere Grenzfrequenz der Filterung im Umrichter auf die maximale Verstellgeschwindigkeit des Generatormoments (T) abgestimmt ist und die maximale Verstellgeschwindigkeit des Blatteinstellwinkels (θ) unberücksichtigt lässt.

7. Windenergieanlage mit
- einem Rotor mit mindestens einem Rotorblatt,
- einem Generator,
- einer Messeinrichtung zur Messung einer Winkelposition (ϕ) eines Triebstrangelements,
- einer Einrichtung (34, 36) zur Ermittlung einer Winkelbeschleunigung (α) des Triebstrangelements,
- einem Drehzahlregler (22) zur Regelung der Drehzahl (n) des Triebstrangelements, der so ausgebildet ist, dass er Sollwerte für das Generatormoment (T) und/oder den Blatteinstellwinkel (θ) unter Berücksichtigung der Winkelgeschwindigkeit (ω) des Triebstrangelements und der Winkelbeschleunigung (α) des Triebstrangelements vorgeben kann, **dadurch gekennzeichnet, dass**
- die Einrichtung (34, 36) zur Ermittlung der Winkelbeschleunigung (α) des Triebstrangelements eine erste Ableitungsstufe (14), die das Winkelpositionssignal (ϕ) zeitlich ableiten kann, eine erste Filterstufe (24), die das einmal zeitlich abgeleitete Winkelpositionssignal (ϕ) mit einer oberen Grenzfrequenz, die auf eine maximale Verstellgeschwindigkeit des Generatormoments (T) und/oder des Blatteinstellwinkels (θ) abgestimmt ist, filtern kann, und eine zweite Ableitungsstufe (26) aufweist, die das einmal zeitlich abgeleitete und gefilterte Winkelpositionssignal (ϕ) ein zweites Mal zeitlich ableiten kann, um die Winkelbeschleunigung (α) des Triebstrangelements zu ermitteln.

8. Windenergieanlage nach Anspruch 7, **dadurch gekennzeichnet, dass** eine zweite Filterstufe (16) vorhanden ist, die das einmal zeitlich abgeleitete Winkelpositionssignal (ϕ) mit einer oberen Grenzfrequenz filtern kann, die kleiner ist als die Hälfte der Abtastfrequenz einer zeitdiskreten Übertragungsstufe (18), die eine zeitdiskrete Übertragung des einmal zeitlich abgeleiteten Winkelpositionssignals (ϕ) ausführen kann.

9. Windenergieanlage nach Anspruch 7 oder 8, **dadurch gekennzeichnet, dass** die erste Filterstufe (24) und/oder die zweite Filterstufe (16) ein Tiefpassfilter mindestens zweiter Ordnung aufweisen.

10. Windenergieanlage nach einem der Ansprüche 7 bis 9, **dadurch gekennzeichnet, dass** die zweite Filterstufe (16) und/oder die erste Ableitungsstufe (14) innerhalb eines Umrichters der Windenergieanlage ausgebildet sind, der ein Generatormoment (T) für den Generator vorgeben kann.

11. Windenergieanlage nach einem der Ansprüche 7 bis 9, **dadurch gekennzeichnet, dass** die zweite Filterstufe (16) und/oder die erste Ableitungsstufe (14) in oder an der Messeinrichtung zur Messung des Winkelpositionssignals (ϕ) ausgebildet sind.

12. Windenergieanlage nach Anspruch 10, **dadurch gekennzeichnet, dass** die obere Grenzfrequenz der ersten Filterstufe (24) auf die maximale Verstellgeschwindigkeit des Generatormoments (T) abgestimmt ist und die maximale Verstellgeschwindigkeit des Blatteinstellwinkels (θ) unberücksichtigt bleibt.

## Claims

1. A method for operating a wind turbine comprising a rotor with at least one rotor blade, a generator and a speed regulator (22) for regulating the rotational speed of a drive train element by adjusting a generator torque (T) and/or a blade pitch angle (θ), comprising the steps of:
• determining the angular speed (ω) of the drive train element through the time derivative of an angular position signal (ϕ),
• determining the angular acceleration (α) of the drive train element,
• presetting desired values for said generator torque (T) and/or said blade pitch angle (θ), taking into account the angular speed (ω) of the drive train element and the angular acceleration (α) of the drive train element, wherein
• the angular acceleration (α) of the drive train element is determined from the angular position signal (ϕ), wherein a filtering with an upper cut off frequency is performed after the first time derivative of the angular position signal (ϕ) and before a second time derivative of the angular position signal (ϕ), said upper cut off frequency being tuned to a maximum adjustment speed of said generator torque (T) and/or of said blade pitch angle (θ).

2. A method according to claim 1, wherein before a time-discrete transmission of the angular speed signal (ω), the same is filtered with an upper cut off frequency which is smaller than half the sampling frequency of the signal.

3. A method according to claim 1 or 2, wherein a low-pass filter of at least second order is used for the filtering after the first time derivative of the angular position signal (ϕ) and/or for the filtering before the time-discrete transmission of the angular speed signal (ω).

4. A method according to one of the claims 1 to 3, wherein the first time derivative of the angular position signal (ϕ) and/or the filtering after the first time derivative of the angular position signal (ϕ) and before a second time derivative of the angular position signal (ϕ) is performed in the converter, which adjusts a generator torque (T).

5. A method according to one of the claims 1 to 3, wherein the first time derivative of the angular position signal (ϕ) and/or the filtering after the first time derivative of the angular position signal (ϕ) and before a second time derivative of the angular position signal (ϕ) is performed in or on a measurement device for measuring the angular position signal (ϕ).

6. A method according to claim 4, wherein the upper cut off frequency of the filtering in the converter is tuned to the maximum adjustment speed of the generator torque (T) and disregards the maximum adjustment speed of the blade pitch angle (θ).

7. A wind turbine with
• a rotor with at least one rotor blade,
• a generator,
• a measurement device for measuring an angular position (ϕ) of a drive train element,
• a device (34, 36) for determining an angular acceleration (α) of the drive train element,
• a rotational speed regulator (22) for regulating the rotational speed (n) of the drive train element, which is adapted to preset desired values for the generator torque (T) and/or the blade pitch angle (θ), taking into account the angular speed (ω) of the drive train element and the angular acceleration (α) of the drive train element, wherein
• the device (34, 36) for determining the angular acceleration (α) of the drive train element comprises a first derivative stage (14) which can differentiate with respect to time the angular position signal (ϕ), a first filtering stage (24) which can filter the angular position signal (ϕ) time-differentiated once by an upper cut off frequency which is tuned to a maximum adjustment speed of the generator torque (T) and/or of the blade pitch angle (θ), and a second derivative stage (26) which can differentiate a second time with respect to time the angular position signal (ϕ) which has been time-differentiated once and filtered, in order to determine the angular acceleration (α) of the drive train element.

8. A wind turbine according to claim 7, wherein a second filtering stage (16) is provided, which can filter the angular position signal (ϕ) time-differentiated once by an upper cut off frequency which is smaller than half the sampling frequency of a time-discrete transmission stage (18), which can perform a time-discrete transmission of the once time-differentiated angular position signal (ϕ).

9. A wind turbine according to claim 7 or 8, wherein the first filtering stage (24) and/or the second filtering stage (16) comprise a low-pass filter of at least second order.

10. A wind turbine according to one of the claims 7 to 9, wherein the second filtering stage (16) and/or the first derivative stage (14) are implemented within a converter of said wind turbine, which can preset a generator torque (T) for the generator.

11. A wind turbine according to one of the claims 7 to 9, wherein the second filtering stage (16) and/or the first derivative stage (14) are implemented within or on the measurement device for measuring the angular position signal (ϕ).

12. A wind turbine according to claim 10, wherein the upper cut off frequency of the first filtering stage (24) is tuned to the maximum adjustment speed of the generator torque (T) and the maximum adjustment speed of the blade pitch angle (0) is disregarded.

## Revendications

1. Procédé de fonctionnement d'une éolienne qui présente un rotor avec au moins une pale de rotor, un générateur et un régulateur de vitesse de rotation (22) pour la régulation de la vitesse de rotation d'un élément de ligne d'entraînement par le réglage d'un couple de générateur et/ou d'un angle de réglage de pale (θ), avec les étapes suivantes :
- détermination de la vitesse angulaire (ω) de l'élément de ligne d'entraînement par la dérivation temporelle d'un signal de position angulaire (ϕ),
- détermination de l'accélération angulaire (α) de l'élément de ligne d'entraînement,
- prédéfinition de valeurs de consigne pour le couple de générateur (T) et/ou l'angle de réglage de pale (θ) avec prise en compte de la vitesse angulaire (ω) de l'élément de ligne d'entraînement et de l'accélération angulaire (α) de l'élément de ligne d'entraînement, **caractérisé en ce que**
- l'accélération angulaire (α) de l'élément de ligne d'entraînement est déterminée à partir du signal de position angulaire (ϕ), un filtrage étant effectué avec une fréquence limite supérieure après la première dérivation temporelle du signal de position angulaire (ϕ) et avant une deuxième dérivation temporelle du signal de position angulaire (ϕ), fréquence limite supérieure qui est adaptée à une vitesse de réglage maximale du couple de générateur (T) et/ou de l'angle de réglage de pale (θ).

2. Procédé selon la revendication 1, **caractérisé en ce que**, avant une transmission discrète dans le temps du signal de vitesse angulaire (ω), ce dernier est filtré avec une fréquence limite supérieure qui est inférieure à la moitié de la fréquence d'échantillonnage du signal.

3. Procédé selon la revendication 1 ou 2, **caractérisé en ce qu'**un filtre passe-bas de second ordre au moins est utilisé pour le filtrage après la première dérivation temporelle du signal de position angulaire (ϕ) et/ou pour le filtrage avant la transmission discrète dans le temps du signal de vitesse angulaire (ω).

4. Procédé selon une des revendications 1 à 3, **caractérisé en ce que** la première dérivation temporelle du signal de position angulaire (ϕ) et/ou le filtrage après la première dérivation temporelle du signal de position angulaire (ϕ) et avant une deuxième dérivation temporelle du signal de position angulaire (ϕ) s'effectuent dans le convertisseur qui règle un couple de générateur (T).

5. Procédé selon une des revendications 1 à 3, **caractérisé en ce que** la première dérivation temporelle du signal de position angulaire (ϕ) et/ou le filtrage après la première dérivation temporelle du signal de position angulaire (ϕ) et avant une deuxième dérivation temporelle du signal de position angulaire (ϕ) s'effectuent dans ou sur un dispositif de mesure pour la mesure du signal de position angulaire (ϕ).

6. Procédé selon la revendication 4, **caractérisé en ce que** la fréquence limite supérieure du filtrage est adaptée dans le convertisseur à la vitesse de réglage maximale du couple de générateur (T) et n'affecte pas la vitesse de réglage maximale de l'angle de réglage de pale (θ).

7. Eolienne, avec
- un rotor ayant au moins une pale de rotor,
- un générateur,
- un dispositif de mesure pour la mesure d'une position angulaire (ϕ) d'un élément de ligne d'entraînement,
- un dispositif (34, 36) pour la détermination d'une accélération angulaire (α) de l'élément de ligne d'entraînement,
- un régulateur de vitesse de rotation (22) pour la régulation de la vitesse de rotation (n) de l'élément de ligne d'entraînement, qui est constitué de telle sorte qu'il peut prédéfinir des valeurs de consigne pour le couple de générateur (T) et/ou pour l'angle de réglage de pale (θ) en prenant en compte la vitesse angulaire (ω) de l'élément de ligne d'entraînement et l'accélération angulaire (α) de l'élément de ligne d'entraînement, **caractérisée en ce que**
- le dispositif (34, 36) pour la détermination de l'accélération angulaire (α) de l'élément de ligne d'entraînement présente un premier étage dérivateur (14) qui peut dériver temporellement le signal de position angulaire (ϕ), un premier étage filtrant (24) qui peut filtrer le signal de position angulaire (ϕ) dérivé temporellement une fois avec une fréquence limite supérieure qui est adaptée à une vitesse de réglage maximale du couple de générateur (T) et/ou de l'angle de réglage de pale (θ), et un deuxième étage dérivateur (26) qui peut dériver temporellement une deuxième fois le signal de position angulaire (ϕ) dérivé temporellement une fois et filtré afin de déterminer l'accélération angulaire (α) de l'élément de ligne d'entraînement.

8. Eolienne selon la revendication 7, **caractérisée en ce qu'**il existe un deuxième étage filtrant (16) qui peut filtrer le signal de position angulaire (ϕ) dérivé temporellement une fois avec une fréquence limite supérieure qui est inférieure à la moitié de la fréquence d'échantillonnage d'un étage de transmission (18) discret dans le temps qui peut effectuer une transmission discrète dans le temps du signal de position angulaire (ϕ) dérivé temporellement une fois.

9. Eolienne selon la revendication 7 ou 8, **caractérisée en ce que** le premier étage filtrant (24) et/ou le deuxième étage filtrant (16) présentent un filtre passe-bas de second ordre au moins.

10. Eolienne selon une des revendications 7 à 9, **caractérisée en ce que** le deuxième étage filtrant (16) et/ou le premier étage dérivateur (14) sont constitués à l'intérieur d'un convertisseur de l'éolienne qui peut prédéfinir un couple de générateur (T) pour le générateur.

11. Eolienne selon une des revendications 7 à 9, **caractérisée en ce que** le deuxième étage filtrant (16) et/ou le premier étage dérivateur (14) sont constitués dans ou sur le dispositif de mesure pour la mesure du signal de position angulaire (ϕ).

12. Eolienne selon la revendication 10, **caractérisée en ce que** la fréquence limite supérieure du premier étage filtrant (24) est adaptée à la vitesse de réglage maximale du couple de générateur (T), et **en ce que** la vitesse de réglage maximale de l'angle de réglage de pale (θ) demeure non prise en compte.
